# EUROPÄISCHE PATENTANMELDUNG

(11) **EP 2 899 651 A1**
(43) Veröffentlichungstag der Anmeldung: **29.07.2015**
(21) Anmeldenummer: 15152342.0
(22) Anmeldetag: 23.01.2015
(51) Int. Cl.: G06F 17/30, G06F 21/30, G06K 19/07

(54) **Verfahren zumindest zum Lesen wenigstens einer Ausweisnummer von Benutzerdatenspeichern mit unterschiedlichen Datenstrukturen**

(30) Priorität: 24.01.2014 DE 102014100794
(71) Anmelder: Inform Systems AG, 78333 Stockach (DE)
(72) Erfinder: Roth, Heinz, 78351 Ludwigshafen (DE); Beck, Joachim, 72461 Albstadt (DE); Schokols, Markus, 72488 Sigmaringen (DE)
(74) Vertreter: Daub, Thomas

(57) **Zusammenfassung**

Verfahren zumindest zum Lesen wenigstens einer Ausweisnummer (10) von Benutzerdatenspeichern (12) mit unterschiedlichen Datenstrukturen, insbesondere von RFID-Karten mit unterschiedlichen Datenstrukturen,
wobei eine Typeninformation (14) eines gelesenen Benutzerdatenspeichers (12) bestimmt wird,
wobei zumindest ein Anweisungsdatensatz (16) zur Anforderung der Ausweisnummer (10) bestimmt wird, der zumindest anhand der Typeninformation (14) an die Datenstruktur des Benutzerdatenspeichers (12) angepasst ist,
wobei der Anweisungsdatensatz (16) an den Benutzerdatenspeicher (12) gesendet wird, wobei der Benutzerdatenspeicher (12) den Anweisungsdatensatz (16) empfängt und daraufhin zumindest die Ausweisnummer (10) sendet.

## Beschreibung

### Stand der Technik

Die Erfindung betrifft ein Verfahren zumindest zum Lesen einer Ausweisnummer von Benutzerdatenspeichern.

Es ist bereits vorgeschlagen worden, Benutzerdatenspeicher mit unterschiedlichen Datenstrukturen mithilfe voneinander unabhängiger Verfahren zu lesen.

Die Aufgabe der Erfindung besteht insbesondere darin, ein gattungsgemäßes besonders flexibles Verfahren bereitzustellen, mittels dessen Benutzerdatenspeicher mit unterschiedlichen Datenstrukturen verwendet werden können. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Es wird ein Verfahren zumindest zum Lesen wenigstens einer Ausweisnummer von Benutzerdatenspeichern mit unterschiedlichen Datenstrukturen, insbesondere von RFID-Karten mit unterschiedlichen Datenstrukturen, vorgeschlagen, wobei eine Typeninformation eines gelesenen Benutzerdatenspeichers bestimmt wird, wobei zumindest ein Anweisungsdatensatz zur Anforderung der Ausweisnummer bestimmt wird, der zumindest anhand der Typeninformation an die Datenstruktur des Benutzerdatenspeichers angepasst ist, wobei der Anweisungsdatensatz an den Benutzerdatenspeicher gesendet wird, wobei der Benutzerdatenspeicher den Anweisungsdatensatz empfängt und daraufhin zumindest die Ausweisnummer sendet. Durch die erfindungsgemäße Ausgestaltung des Verfahrens kann konstruktiv einfach eine Kommunikation mit Benutzerdatenspeichern mit unterschiedlichen Datenstrukturen erreicht werden. Insbesondere ist besonders einfach eine Anpassung an eine Kommunikation mit zukünftigen Benutzerdatenspeichern mit neuen Datenstrukturen möglich. Es kann eine große Unabhängigkeit eines Endkunden gegenüber Herstellern von Identifizierungssystem hinsichtlich der Verwendung von Benutzerdatenspeichern erreicht werden. Eine notwendige Grundinitialisierung von Benutzerdatenspeichern durch einen Hersteller kann vermieden werden.

Unter einer "Ausweisnummer" soll insbesondere eine Information, vorzugsweise eine Folge von Zeichen, bevorzugt eine Folge von alphanumerischen Zeichen und besonders bevorzugt eine Folge von Zahlzeichen, verstanden werden, die dazu vorgesehen ist, den Benutzerdatenspeicher eindeutig zu identifizieren. Vorzugsweise basiert eine Primärfunktion des Benutzerdatenspeichers, beispielsweise ein Bezahlverfahren und/oder vorteilhaft eine Zugangsberechtigungsüberprüfung, in zumindest einem Betriebszustand auf der Ausweisnummer. Insbesondere speichert der Benutzerdatenspeicher die Ausweisnummer geschützt, und zwar vorteilhaft verschlüsselt und/oder durch ein Authentifizierungsverfahren geschützt. Vorteilhaft weist der Benutzerdatenspeicher weitere, dem Fachmann als sinnvoll erscheinende, zur Erfüllung der Primärfunktion erforderliche Informationen auf, beispielsweise einen Kontostand eines Bezahlsystems und/oder vorteilhaft Zugangsberechtigungsinformationen, die insbesondere zur Offline-Überprüfung einer Zugangsberechtigung durch ein Zutrittskontrollmittel vorgesehen sind, wie beispielsweise Berechtigungsdaten eines Aperio-Zutrittskontrollsystems. Insbesondere weist der Benutzerdatenspeicher mehrere Ausweisnummern für verschiedene Primärfunktionen auf, die vorteilhaft in unterschiedlichen Sektoren und/oder Segmenten des Benutzerdatenspeichers gespeichert sind. Unter einem "Benutzerdatenspeicher" soll insbesondere ein mobiler Datenspeicher verstanden werden, der von einem Benutzer für die primäre Funktion des Identifizierungssystems mitführbar ist. Die Primärfunktion des Benutzerdatenspeichers ist als eine, dem Fachmann als sinnvoll erscheinende Funktion, vorteilhaft jedoch eine Bezahlfunktion, besonders vorteilhaft eine Zugangsberechtigungsfunktion, ausgebildet. Vorteilhaft weisen die verschiedenen unterstützten Benutzerdatenspeicher unterschiedliche Speichergrößen auf, beispielsweise 1 Kilobyte oder 4 Kilobyte. Insbesondere weisen die Benutzerdatenspeicher mehrere getrennt ansprechbare Segmente und/oder Sektoren auf, in denen vorteilhaft verschiedene Ausweisnummern und/oder andere Informationen gespeichert sind. Insbesondere soll unter der Wendung "unterschiedliche Datenstrukturen" verstanden werden, dass zur Kommunikation mit den verschiedenen unterstützten Benutzerdatenspeichern unterschiedlich strukturierte Anweisungsdatensätze gesendet und/oder empfangen und verarbeitet werden. Vorzugsweise kommuniziert die Identifizierungsvorrichtung mit den unterschiedlichen Benutzerdatenspeichern mittels unterschiedlicher Kommunikationsprotokolle. Insbesondere sind die unterschiedlichen Datenstrukturen als Datenstrukturen vom Typ MIFARE classic, MIFARE plus, MIFARE DESFire, LEGIC prime, LEGIC advant und/oder TCOS ausgebildet. Insbesondere sind die Kommunikationsprotokolle jeweils entsprechend dem Typ der Datenstruktur ausgebildet.

Unter einer "Typeninformation" soll insbesondere eine Information verstanden werden, die auf eine der unterschiedlichen Datenstrukturen verweist. Vorzugsweise weist die Identifizierungsvorrichtung eine Datenbank mit einer Datenstrukturzuordnungstabelle auf, die einer von dem Benutzerdatenspeicher gesendeten Identifikationsinformation des Benutzerdatenspeichers zumindest die Typeninformation zuordnet. Vorzugsweise ist die Typeninformation als ein Identifikationsbyte ausgebildet, beispielsweise 0x20 für MIFARE DESFire. Alternativ könnte der Benutzerdatenspeicher die Typeninformation senden. Insbesondere soll unter "bestimmen" in diesem Zusammenhang verstanden werden, dass die Typeninformation von einer Information abhängig ermittelt wird, die der Benutzerdatenspeicher sendet. Vorzugsweise bestimmt die Identifizierungsvorrichtung die Typeninformation mittels der Datenstrukturzuordnungstabelle.

Unter einem "Anweisungsdatensatz" sollen insbesondere Daten verstanden werden, die zur Kommunikation mit dem Benutzerdatenspeicher notwendige Informationen aufweisen, wie insbesondere Schlüssel, Daten zur Fehlerüberprüfung, vorteilhaft CRC-Daten und/oder Identifizierungsdaten. Vorzugsweise werden zumindest anhand der Typeninformation und vorteilhaft anhand einer Lesernummer ein oder mehrere Anweisungsdatensätze zur Anforderung der Ausweisnummer bestimmt. Insbesondere soll unter der Wendung "zur Anforderung der Ausweisnummer" verstanden werden, dass der Anweisungsdatensatz an den Benutzerdatenspeicher gesendet wird und der Benutzerdatenspeicher in zumindest einem Betriebszustand zumindest mit der Ausweisnummer antwortet, beispielsweise wenn der Anweisungsdatensatz einem von dem Benutzerdatenspeicher unterstützten Protokoll entspricht und/oder insbesondere den richtigen Schlüssel aufweist. Unter "anhand der Typeninformation an die Datenstruktur des Benutzerdatenspeichers angepasst" soll insbesondere verstanden werden, dass die Identifizierungsvorrichtung zumindest einen Anweisungsdatensatz auf Grundlage der Typeninformation wählt oder erzeugt, der an die Datenstruktur des Benutzerdatenspeichers angepasst ist. Vorzugsweise ist eine Anzahl der Anweisungsdatensätze wenigstens von der Typeninformation abhängig.

In einer weiteren Ausgestaltung wird vorgeschlagen, dass eine Identifikationsinformation des Benutzerdatenspeichers gelesen wird und zumindest von der Identifikationsinformation abhängig die Typeninformation des Benutzerdatenspeichers bestimmt wird, wodurch ein besonders flexibel anpassbares Verfahren erreicht werden kann. Unter einer "Identifikationsinformation" soll insbesondere eine Information verstanden werden, die der Benutzerdatenspeicher sendet und die einen Hinweis auf die Datenstruktur des Benutzerdatenspeichers aufweist. Vorzugsweise ist die Identifikationsinformation als ein Identifikationsbyte ausgebildet, beispielsweise 0x20 für MIFARE DESFire. Insbesondere soll unter "eine Information von einer Information abhängig bestimmen" verstanden werden, dass insbesondere die Identifizierungsvorrichtung die zu bestimmende Information berechnet und/oder eine Datenbank nach einem auf die zu bestimmende Information verweisenden Eintrag durchsucht.

In vorteilhafter Weise wird von einer Lesernummer einer den Benutzerdatenspeicher lesenden Lesevorrichtung und der Typeninformation abhängig eine Anweisungsabfolge ermittelt. Dadurch können unterschiedliche Lesevorrichtungen, die für unterschiedliche Primärfunktionen vorgesehen sind, Daten mit dem Benutzerdatenspeicher austauschen.

In einer vorteilhaften Ausgestaltung umfasst die Anweisungsabfolge zumindest den Anweisungsdatensatz zur Anforderung der Ausweisnummer. Dadurch kann eine Ausweisnummer ohne eine Zusatzinformation durch einen Benutzer übermittelt werden. Dadurch kann ein besonders benutzerfreundliches Verfahren erreicht werden.

Des Weiteren wird vorgeschlagen, dass von einer Lesernummer einer den Benutzerdatenspeicher lesenden Lesevorrichtung und der Typeninformation abhängig eine Anweisungsabfolge zum Lesen der Ausweisnummer ermittelt wird, wodurch unterschiedliche Primärfunktionen, beispielsweise eine Bezahlfunktion und eine Zugangsberechtigungsfunktion, besonders vorteilhaft umgesetzt werden können. Unter einer "Lesernummer" soll insbesondere eine Information verstanden werden, die eine Lesevorrichtung eindeutig identifiziert. Insbesondere ordnet die Identifizierungsvorrichtung einer empfangenen Information eines Benutzerdatenspeichers die Lesernummer anhand einer Information einer Schnittstelle der Identifizierungsvorrichtung zu, die die Information des Benutzerdatenspeichers empfangen hat. Insbesondere erkennt die Identifizierungsvorrichtung, über welche Schnittstelle die Information des Benutzerdatenspeichers empfangen wurde, wenn jede Lesevorrichtung an einer eigenen Schnittstelle angeschlossen ist. Alternativ ordnet die Identifizierungsvorrichtung die Lesernummer anhand einer Adressierungsinformation der Schnittstelle zu, beispielsweise anhand einer BUS-Adresse. Insbesondere soll unter einer "Lesevorrichtung" eine Vorrichtung verstanden werden, die dazu vorgesehen ist, insbesondere drahtlos eine Datenverbindung zu dem Benutzerdatenspeicher herzustellen. Vorzugsweise moduliert die Lesevorrichtung von der Identifizierungsvorrichtung gesendete Informationen auf einen Träger. Insbesondere demoduliert die Lesevorrichtung von dem Benutzerdatenspeicher gesendete Informationen. Vorteilhaft leitet die Lesevorrichtung die von dem Benutzerdatenspeicher gesendeten Informationen unverändert an die Identifizierungsvorrichtung weiter. Unter einer "Anweisungsabfolge" soll insbesondere eine Abfolge von einem oder mehreren nacheinander versendeten und/oder empfangenen Datenpaketen einer Kommunikation zwischen der Identifizierungsvorrichtung und dem Benutzerdatenspeicher verstanden werden. Unter einer "Anweisungsabfolge zum Lesen der Ausweisnummer" soll insbesondere eine Anweisungsabfolge verstanden werden, die dazu vorgesehen ist, die Ausweisnummer von dem Benutzerdatenspeicher anzufordern.

In vorteilhafter Weise überträgt die Lesevorrichtung die Anweisungsabfolge drahtlos an den Benutzerdatenspeicher. Dadurch können Daten ohne eine Benutzeraktion oder durch eine besonders einfache Benutzeraktion ausgetauscht werden. Es kann ein effizientes und/oder ein für den Benutzer besonders komfortables Verfahren erreicht werden. Unter "drahtlos übertragen" soll in diesem Zusammenhang insbesondere verstanden werden, dass die Anweisungsabfolge über einen vorteilhaft körperlosen Informationsträger, beispielsweise über Schall-, Licht- und/oder vorzugsweise Funksignale ausgesendet wird. Vorzugsweise überträgt das Datenübertragungsmittel die Signale durch zumindest einen Isolator hindurch. Vorzugsweise überträgt die Lesevorrichtung die Anweisungsabfolge mittels eines RFID-Protokolls an den Benutzerdatenspeicher. Dadurch können erprobte Protokolle und/oder gut verfügbare Protokolle eingesetzt werden.

In einer vorteilhaften Ausgestaltung umfasst die Anweisungsabfolge zumindest einen Anweisungsdatensatz zur Auswahl der Ausweisnummer aus einem Ausweisnummernsatz. Dadurch kann der Benutzerdatenspeicher vorteilhaft für unterschiedliche Primärfunktionen genutzt werden. Es kann ein hoher Benutzerkomfort erreicht werden. Vorzugsweise umfasst der Ausweisnummernsatz eine Mehrzahl von Ausweisnummern, die jeweils zumindest einer Primärfunktion zugeordnet sind. Bevorzugt umfasst der Ausweisnummernsatz eine Mehrzahl von Ausweisnummern, die jeweils als eine eindeutig unterscheidbare Zeichenfolge, beispielsweise als eine Folge alphanumerischer Zeichen oder als eine Folge von Ziffernzeichen ausgebildet sind. Vorzugsweise umfasst die Anweisungsabfolge zumindest einen Anweisungsdatensatz zur Auswahl eines Sektors und/oder eines Segments, in dem die Ausweisnummer aus dem Ausweisnummernsatz gespeichert ist.

In vorteilhafter Weise wird eine Primärfunktion bestimmt, der die Ausweisnummer zugeordnet ist. Dadurch kann der Benutzerdatenspeicher besonders komfortabel für unterschiedliche Primärfunktionen genutzt werden. Vorzugsweise wird die Primärfunktion mittels der Lesernummer und/oder anhand einer Adressierungsinformation der Schnittstelle und/oder anhand einer Zuordnungstabelle bestimmt, die beispielsweise in einer Datenbank hinterlegt ist. Vorzugsweise ist die Lesernummer zumindest einem Kontrollmittel, wie beispielsweise einem Zutrittskontrollmittel, einem Zugangskontrollmittel, beispielsweise zur Kontrolle eines Datenzugangs, oder einem Ausgabekontrollmittel, wie beispielsweise einem Spenderautomaten zugeordnet.

Ferner wird vorgeschlagen, dass ein Berechtigungsstatus der Ausweisnummer bestimmt wird, wodurch für die Primärfunktion unberechtigte Benutzerdatenspeicher vorteilhaft erkannt werden können. Insbesondere soll unter einem "Berechtigungsstatus" eine Information verstanden werden, die angibt, ob auf ein Lesen der Ausweisnummer die Primärfunktion erfolgt, beispielsweise ob eine Türe zu einem Bereich geöffnet wird, oder ob die Primärfunktion nicht erfolgt, beispielsweise wenn der Benutzerdatenspeicher einen Zutritt zu dem Bereich nicht gestattet.

Zudem wird vorgeschlagen, dass zumindest von der Ausweisnummer abhängig Schreibdaten bestimmt werden, die auf den Benutzerdatenspeicher geschrieben werden, wodurch Offlinefunktionen und weitere Funktonen vorteilhaft integriert werden können. Die Schreibdaten sind als dem Fachmann als sinnvoll erscheinende Daten ausgebildet, vorzugsweise als Daten eines Zutrittskontrollsystems, beispielsweise als Daten eines Aperio-Zutrittskontrollsystems oder als Daten eines Zutrittskontrollsystems eines anderen Herstellers.

Weiterhin wird vorgeschlagen, dass zumindest von der Ausweisnummer abhängig eine Anweisungsabfolge bestimmt wird, mittels deren die Schreibdaten auf den Benutzerdatenspeicher geschrieben werden, wodurch die Schreibdaten besonders flexibel bereitgestellt werden können.

In einer vorteilhaften Ausbildung der Erfindung wird vorgeschlagen, dass zumindest von dem Berechtigungsstatus abhängig eine Zugangssteuerung erfolgt, wodurch besonders einfach eine flexible Zugangskontrolle erreicht werden kann. Unter einer "Zugangssteuerung" soll insbesondere ein Vorgang verstanden werden, bei dem ein Zugang zu einem Bereich insbesondere mittels eines Zutrittskontrollmittels freigegeben wird.

Des Weiteren geht die Erfindung aus von einem Identifizierungssystem zumindest zum Lesen wenigstens einer Ausweisnummer von Benutzerdatenspeichern mit unterschiedlichen Datenstrukturen, insbesondere von RFID-Karten mit unterschiedlichen Datenstrukturen, mit zumindest einem Benutzerdatenspeicher und mit einer Identifizierungsvorrichtung, die dazu vorgesehen ist, eine Typeninformation des gelesenen Benutzerdatenspeichers zu bestimmen.

Es wird vorgeschlagen, dass die Identifizierungsvorrichtung dazu vorgesehen ist, wenigstens einen Anweisungsdatensatz zur Anforderung der Ausweisnummer zu bestimmen, der zumindest anhand der Typeninformation des gelesenen Benutzerdatenspeichers an die Datenstruktur des Benutzerdatenspeicher angepasst ist.

In einer vorteilhaften Ausgestaltung wird ein Initialisierungsstatus des Benutzerdatenspeichers bestimmt, in dessen Abhängigkeit der Benutzerdatenspeicher initialisiert wird. Dadurch kann ein besonders flexibel einsetzbares Verfahren erreicht werden. Eine Grundinitialisierung von Benutzerdatenspeichern kann von einem Endkunden unabhängig von einem Hersteller einer Identifizierungssystems durchgeführt werden. Es kann eine Unabhängigkeit eines Endkunden gegenüber Herstellern von Identifizierungssystemen erreicht werden. Es kann erreicht werden, dass ein Endkunde vorteilhaft Benutzerdatenspeicher eines beliebigen Herstellers, beispielsweise besonders kostengünstige und/oder besonders hochwertige Benutzerdatenspeicher, einsetzen kann. Es kann in besonders kostengünstiges Verfahren erreicht werden. Es kann ein besonders kostengünstiger Betrieb eines Identifizierungssystems erreicht werden. Ein Benutzerdatenspeicher kann besonders einfach ersetzt werden, beispielsweise bei einem Verlust oder einem Defekt des Benutzerdatenspeichers. Vorzugsweise wird der Initialisierungsstatus anhand einer Antwort des Benutzerdatenspeichers auf den Anweisungsdatensatz bestimmt. Es ist auch denkbar, dass der Initialisierungsstatus anhand einer Zuordnungstabelle, beispielsweise anhand der Datenstrukturzuordnungstabelle bestimmt wird, welche einer von dem Benutzerdatenspeicher gesendeten Identifikationsinformation des Benutzerdatenspeichers zumindest den Initialisierungsstatus zuordnet. Unter einem "Initialisierungsstatus" soll in diesem Zusammenhang insbesondere ein Zustand des Benutzerdatenspeichers verstanden werden, der angibt, ob der Benutzerdatenspeicher auf einem Speichermedium oder zumindest auf einem Teil eines Speichermediums zum Lesen und/oder Schreiben von Daten vorbereitet ist, insbesondere ob das Speichermedium oder zumindest ein Teil des Speichermediums eine mit Daten beschreibbare Datenstruktur aufweist. Unter "initialisieren" soll in diesem Fall für einen Datenaustausch zu einer Speicherung und/oder zu einem Lesezugriff vorbereiten und/oder einrichten und/oder formatieren verstanden werden. Bevorzugt wird auf einem Speichermedium des Benutzerdatenspeichers oder zumindest auf einem Teil des Speichermediums eine Datenstruktur zur Aufnahme von Daten angelegt. Vorzugsweise wird die Datenstruktur zur Initialisierung von der Lesernummer und/oder von der Identifikationsinformation abhängig bestimmt, beispielsweise mittels einer Zuordnungstabelle.

Unter einer "Identifizierungsvorrichtung" soll insbesondere eine Vorrichtung verstanden werden, die wenigstens dazu vorgesehen ist, den Benutzerdatenspeicher zu identifizieren. Vorzugsweise weist die Identifizierungsvorrichtung zumindest eine Recheneinheit und eine Schnittstelle zur Kommunikation zumindest mit einer Lesevorrichtung und vorteilhaft mit wenigstens einem Zutrittskontrollmittel auf. Vorzugsweise ist die Identifizierungsvorrichtung dazu vorgesehen, mit mehreren Zutrittskontrollmitteln zu kommunizieren. Vorteilhaft ist die Identifizierungsvorrichtung dazu vorgesehen, über mehrere Lesevorrichtungen mit Benutzerdatenspeichern zu kommunizieren. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Zudem wird vorgeschlagen, dass die Identifizierungsvorrichtung eine Datenbank aufweist, die wenigstens dazu vorgesehen ist, der Typeninformation des Benutzerdatenspeichers zumindest eine Anweisungsinformation zur Erzeugung des Anweisungsdatensatzes zuzuordnen, wodurch konstruktiv einfach eine flexible Erzeugung des Anweisungsdatensatzes möglich ist. Unter einer "Datenbank" soll insbesondere ein Mittel der Identifizierungsvorrichtung verstanden werden, das dazu vorgesehen ist, Daten des Benutzerdatenspeichers und vorgegebene Daten, insbesondere zur Kommunikation mit dem Benutzerdatenspeicher, einander zuzuordnen. Vorzugsweise weist die Datenbank mehrere Tabellen auf. Die Datenbank ist als eine, dem Fachmann als sinnvoll erscheinende Datenbank ausgebildet, beispielsweise als eine SQL-Datenbank. Unter einer "Anweisungsinformation" soll insbesondere eine Information verstanden werden, die zur Erzeugung des auf die Datenstruktur des Benutzerdatenspeichers angepassten Anweisungsdatensatzes notwendige Informationen aufweist. Vorzugsweise ist die Anweisungsinformation aus zwei Teilinformationen zusammengesetzt, von denen eine von der Datenstruktur des Benutzerdatenspeichers abhängig ist. Insbesondere weist die Anweisungsinformation Informationen über eine physikalische Struktur der Benutzerdatenspeicher, wie Daten vor einem Schreiben auf die Benutzerdatenspeicher verarbeitet werden sollen, wie im Fehlerfall verfahren werden soll, ob und wie Daten gelesen oder geschrieben werden sollen, über eine Signatur, welche Sektoren und/oder Segmente geschrieben oder gelesen werden sollen, die eine Verschlüsselung beschreiben, die einen Schlüssel für die Verschlüsselung aufweisen, und/oder über eine Fehlerkorrektur, auf. Insbesondere soll unter dem Begriff "zuordnen" in diesem Zusammenhang verstanden werden, dass die Datenbank nach Daten durchsuchbar ist und zu gefundenen Daten weiterführende Daten bereitstellt.

Ferner wird vorgeschlagen, dass das Identifizierungssystem zumindest eine Lesevorrichtung aufweist, die in zumindest einem Betriebszustand wenigstens eine Identifikationsinformation des Benutzerdatenspeichers liest, wodurch eine vorteilhafte Zuordnung der Typeninformation möglich ist. Vorzugsweise ist die Identifizierungsvorrichtung dazu vorgesehen, über mehrere verschiedene Lesevorrichtungen des Identifizierungssystems mit Benutzerdatenspeichern zu kommunizieren.

Zudem wird vorgeschlagen, dass die Identifizierungsvorrichtung dazu vorgesehen ist, aus der Identifikationsinformation eine Typeninformation des Benutzerdatenspeichers zu bestimmen, wodurch eine besonders flexible Erzeugung des Anweisungsdatensatzes möglich ist.

Weiterhin wird vorgeschlagen, dass das Identifizierungssystem zumindest ein Zutrittskontrollmittel aufweist, das die Identifizierungsvorrichtung von der Ausweisnummer abhängig steuert, wodurch Benutzerdatenspeicher mit unterschiedlichen Datenstrukturen vorteilhaft zur Zutrittskontrolle verwendet werden können. Unter einem "Zutrittskontrollmittel" soll insbesondere ein Mittel verstanden werden, das dazu vorgesehen ist, einen Zutritt zu einem Bereich freizugeben, wie insbesondere ein Türöffner. Vorzugsweise ist die Identifizierungsvorrichtung dazu vorgesehen, mehrere verschiedene Zutrittskontrollmittel anzusteuern.

In einer vorteilhaften Ausgestaltung umfasst das Identifizierungssystem zumindest eine Schreibvorrichtung, die zumindest dazu vorgesehen ist, den Benutzerdatenspeicher zu initialisieren. Dadurch kann ein besonders flexibel einsetzbares Identifizierungssystem bereitgestellt werden. Es kann eine einfache und kostengünstige Verwaltung des Identifizierungsproblems erreicht werden. Vorzugsweise weisen die Lesevorrichtung und die Schreibvorrichtung zumindest eine gemeinsame Sende- und/oder Empfangseinheit auf und/oder sind in einem gemeinsamen Gehäuse angeordnet.

Vorzugsweise weist die Datenstruktur des Benutzerdatenspeichers verschiedene Sektoren und/oder Segmente zur Speicherung von verschiedenen Ausweisnummern auf. Bevorzugt sind unterschiedliche Ausweisnummern unterschiedlichen Sektoren und/oder Segmenten zugeordnet. Besonders sind den Sektoren und/oder Segmenten unterschiedliche Primärfunktionen zugeordnet.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Identifizierungssystems,
- Fig. 2: einen Ablauf einer Identifizierungsroutine einer Identifizierungsvorrichtung des Identifizierungssystems aus Figur 1,

- Fig. 3: einen Informationsfluss der Identifizierungsroutine aus Figur 2 bei einem Lesen einer Ausweisnummer eines Benutzerdatenspeichers des Identifizierungssystems aus Figur 1 und
- Fig. 4: einen Informationsfluss der Identifizierungsroutine aus Figur 2 bei einem Schreiben von Informationen auf den Benutzerdatenspeicher.

### Beschreibung des Ausführungsbeispiels

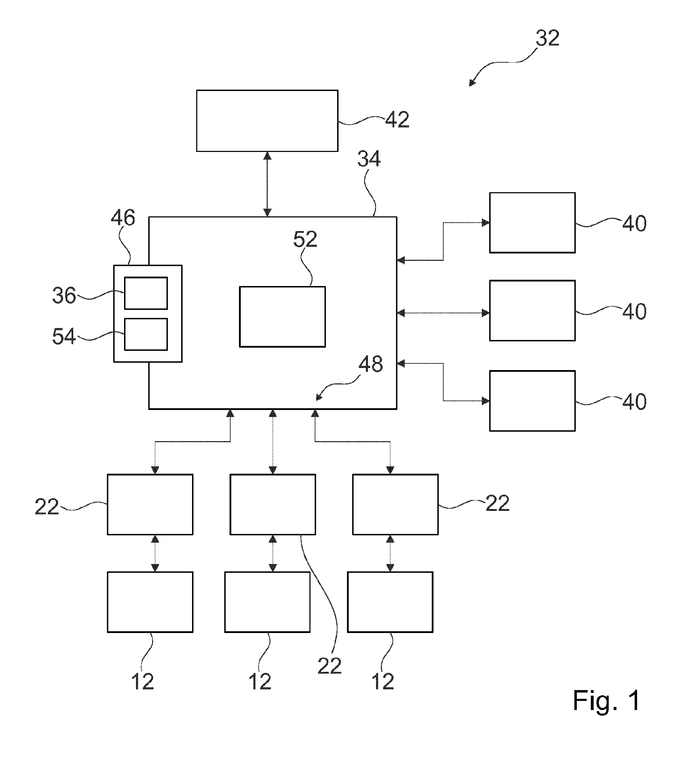

Figur 1 zeigt ein Identifizierungssystem 32 mit mehreren Benutzerdatenspeichern 12, einer Identifizierungsvorrichtung 34, mehreren Lesevorrichtungen 22, mehreren Zutrittskontrollmitteln 40 und zumindest einem Identifizierungsserver 42. Die Benutzerdatenspeicher 12 des Identifizierungssystems 32 weisen unterschiedliche Datenstrukturen auf. Die unterschiedlichen Benutzerdatenspeicher 12 werden durch unterschiedliche aufgebaute Anweisungsabfolgen 24, 30 von einem oder mehreren Anweisungsdatensätzen 16', 16", 16'" mittels der Identifizierungsvorrichtung 34 beschrieben und gelesen.

Der Identifizierungsserver 42 ist zur Eingabe von Berechtigungsdaten vorgesehen, die beschreiben, in welche durch das Identifizierungssystem 32 kontrollierte Bereiche 44 die Benutzerdatenspeicher 12 einen Zutritt ermöglichen. Alternativ oder zusätzlich könnte der Identifizierungsserver 42 eine andere Primärfunktion des Benutzerdatenspeichers 12 verwalten, beispielsweise ein Guthaben einer Bezahlfunktion. Es ist denkbar, dass der Benutzerdatenspeicher 12 für weitere Primärfunktionen vorgesehen ist, wie Warenausgabefunktion, beispielsweise für Bücher oder andere Medien, oder für einen Spenderautomaten, beispielsweise für Speisen und/oder Getränke. Weiter ist denkbar, dass zumindest eine der Primärfunktionen eine Anzeigefunktion, beispielsweise zur Anzeige eines Budgets, einer Agenda oder einer anderen dem Fachmann sinnvoll erscheinenden Information ist. Der Identifizierungsserver 42 bestimmt aus einer Information über einen Typ eines Benutzerdatenspeichers 12, für den die Berechtigungsdaten vorgesehen sind, Anweisungsabfolgen 24, 30 aus einem oder mehreren Anweisungsdatensätzen 16', 16", 16'" zum Beschreiben und/oder Lesen des Benutzerdatenspeichers 12.

Der Identifizierungsserver 42 sendet die Anweisungsabfolgen 24, 30 an die Identifizierungsvorrichtung 34. Dazu sind der Identifizierungsserver 42 und die Identifizierungsvorrichtung 34 über ein Netzwerk miteinander verbunden. Die Identifizierungsvorrichtung 34 speichert die Anweisungsabfolgen 24, 30 auf einem Massendatenspeicher 46. Alternativ könnte der Identifizierungsserver 42 den Massendatenspeicher 46 beschreiben und dieser in die Identifizierungsvorrichtung 34 eingesetzt werden, wodurch eine Netzwerkverbindung zwischen dem Identifizierungsserver 42 und der Identifizierungsvorrichtung 34 unnötig ist.

Der Massendatenspeicher 46 ist aus der Identifizierungsvorrichtung 34 entnehmbar. Der Massendatenspeicher 46 weist alle zum Betrieb der Identifizierungsvorrichtung 34 notwendigen Informationen und Konfigurationen auf, wodurch bei einem Austausch der Identifizierungsvorrichtung 34 lediglich der Massendatenspeicher 46 aus der alten Identifizierungsvorrichtung 34 entnommen und in eine neu verbaute Identifizierungsvorrichtung 34 eingefügt werden muss. Der Massendatenspeicher 46 ist als eine Speicherkarte, beispielsweise eine SD-Karte, ausgebildet.

Die Identifizierungsvorrichtung 34 kommuniziert anhand der Anweisungsabfolgen 24, 30 über die Lesevorrichtungen 22 mit den Benutzerdatenspeichern 12. Die Lesevorrichtungen 22 sind dazu vorgesehen, drahtgebunden Signale der Identifizierungsvorrichtung 34 drahtlos an die Benutzerdatenspeicher 12 zu senden, und zwar vorzugsweise nach einem RFID-Standard. Insbesondere bleiben die Anweisungsabfolgen 24, 30 und die Daten der Anweisungsabfolgen 24, 30 durch die Lesevorrichtungen 22 unverändert.

Die Lesevorrichtungen 22 sind jeweils über eine eigene Schnittstelle 48 mit der Identifizierungsvorrichtung 34 verbunden. Anhand der verwendeten Schnittstelle 48 wird der Kommunikation mit dem Benutzerdatenspeicher 12 eine Lesernummer 20 zugeordnet. Alternativ könnten Lesevorrichtungen über einen Bus mit einer Identifizierungsvorrichtung verbunden sein und eine Lesernummer könnte anhand einer Busadresse zugeordnet werden.

Eine Ausweisnummer 10' eines der Benutzerdatenspeicher 12 ist dazu vorgesehen, diesen Benutzerdatenspeicher 12 eindeutig zu identifizieren. Zudem umfasst der Benutzerdatenspeicher 12 weitere Informationen zur Nutzung ohne Datenverbindung zur Identifizierungsvorrichtung 34, beispielsweise Zugangsberechtigungen für Türschlösser oder einen Kontostand der Bezahlfunktion.

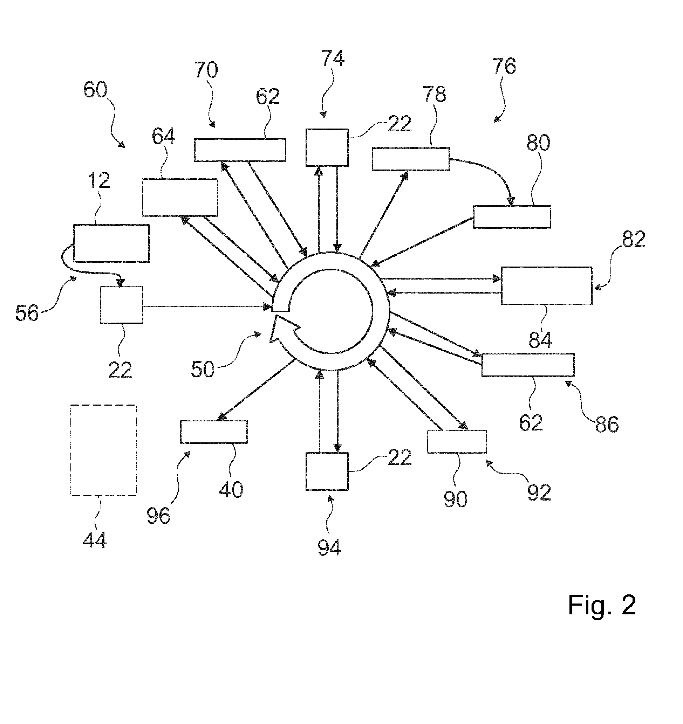

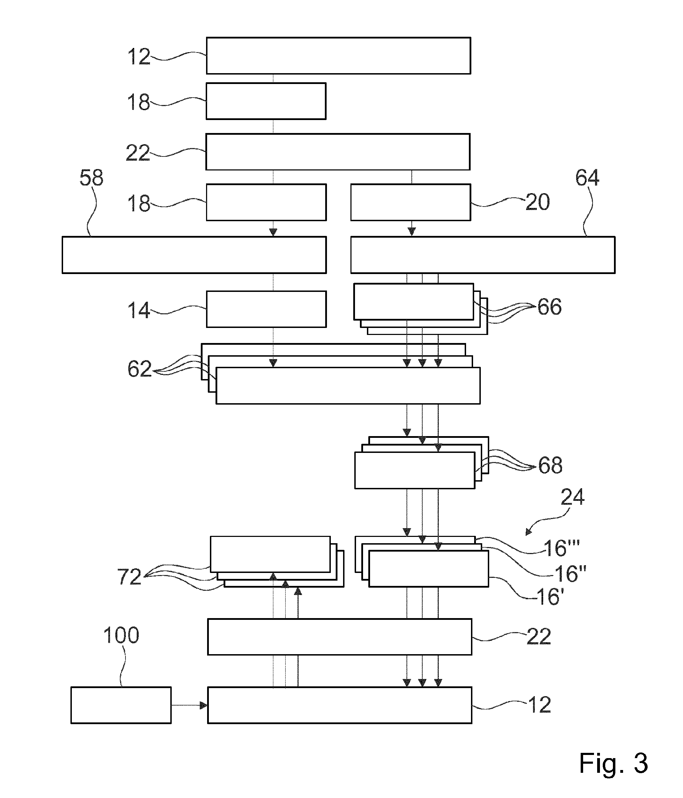

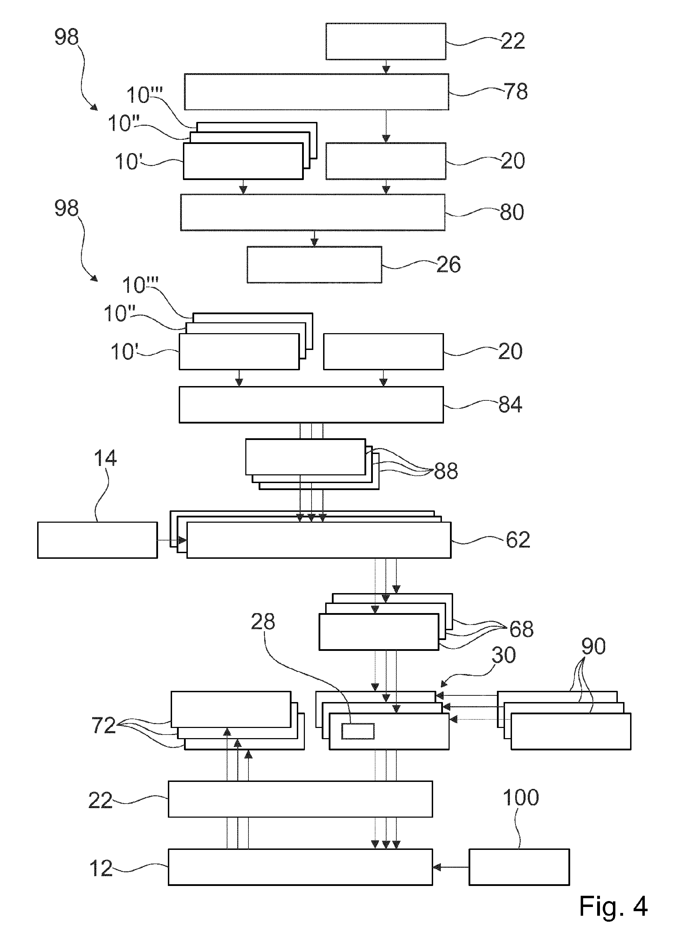

Figuren 2, 3 und 4 zeigen einen Ablauf einer Identifizierungsroutine 50 der Identifizierungsvorrichtung 34 und einen Informationsfluss der Identifizierungsroutine 50.

Die Identifizierungsroutine 50 wird von einer Recheneinheit 52 der Identifizierungsvorrichtung 34 ausgeführt, wenn einer der Benutzerdatenspeicher 12 mittels einer der Lesevorrichtungen 22 gelesen wird. Die Identifizierungsroutine 50 greift auf eine Datenbank 36 der Identifizierungsvorrichtung 34 zu.

Die Tabellen der Datenbank 36 sind auf dem Massendatenspeicher 46 gespeichert. Die Datenbank 36 ist dazu vorgesehen, eine große Anzahl verschiedener Anweisungsabfolgen 24, 30 zu speichern. Zudem weist die Identifizierungsvorrichtung 34 ein Dateisystem 54 auf. In dem Dateisystem 54 sind Dateien 90 gespeichert, die anhand der Anweisungsabfolgen 24, 30 an den Benutzerdatenspeicher 12 versendet werden.

In einem ersten Verfahrensschritt 56 empfängt die Identifizierungsroutine 50 eine Identifikationsinformation 18 eines der Benutzerdatenspeicher 12 und eine Lesernummer 20 der Lesevorrichtung 22, über die der Benutzerdatenspeicher 12 mit der Identifizierungsvorrichtung 34 kommuniziert.

Die Datenbank 36 der Identifizierungsvorrichtung 34 weist eine Datenstrukturzuordnungstabelle 58 auf. Die Datenstrukturzuordnungstabelle 58 ist dazu vorgesehen, in einem weiteren Verfahrensschritt 60 der Identifikationsinformation 18 des gelesenen Benutzerdatenspeichers 12 eine Typeninformation 14 des Benutzerdatenspeichers 12 zuzuordnen. Die Typeninformation 14 ist als ein Verweis auf eine von mehreren Anweisungstabellen 62 ausgebildet, die an die Datenstruktur des gelesenen Benutzerdatenspeichers 12 angepasste Anweisungen aufweist. Neben der Identifikationsinformation 18 und der Typeninformation 14 weist die Datenstrukturzuordnungstabelle 58 Informationen auf, die zur Kommunikation mit dem Benutzerdatenspeicher 12 sinnvoll sind, wie beispielsweise Versionsinformationen sowie Informationen über unterstützte und/oder verwendete Protokolle.

Die Datenbank 36 der Identifizierungsvorrichtung 34 weist eine Leser-Anweisungstabelle 64 auf. Die Leser-Anweisungstabelle 64 ist dazu vorgesehen, in einem nächsten Verfahrensschritt 70 der Lesernummer 20 der Lesevorrichtung 22 eine oder mehrere Anweisungsnummern 66 zuzuordnen, hier sind der Lesernummer 20 drei Anweisungsnummern 66 zugeordnet. Die Anweisungsnummern 66 verweisen jeweils auf eine Anweisungsinformation 68 der Anweisungstabelle 62. Die Anweisungsinformationen 68 beschreiben einen Aufbau der Anweisungsdatensätze 16', 16", 16'" zur Anforderung der Ausweisnummer 10'. Die hier vorliegenden drei Anweisungsdatensätze 16' bilden die Anweisungsabfolge 24 zur Anforderung der Ausweisnummer 10'.

Die Identifizierungsroutine 50 erzeugt mittels der Anweisungsinformation 68 die Anweisungsdatensätze 16', in diesem Fall drei Anweisungsdatensätze 16', 16", 16"'. Das Verfahren bestimmt somit Anweisungsdatensätze 16', 16", 16'" zur Anforderung der Ausweisnummer 10', die anhand der Typeninformation 14 an die Datenstruktur des Benutzerdatenspeichers 12 angepasst sind. Die Anweisungsabfolge 24 wird von der Lesernummer 20 abhängig ermittelt.

In dem vorliegenden Ausführungsbeispiel wird von der Lesernummer 20 abhängig eine Primärfunktion bestimmt, welcher die auszulesende Ausweisnummer 10' zugeordnet ist. Der Benutzerdatenspeicher 12 weist einen Ausweisnummernsatz 98 mit einer Mehrzahl von Ausweisnummern 10', 10", 10'" auf. Einer oder mehrere der Anweisungsdatensätze 16' 16", 16'" der Anweisungsabfolge 24 ist zur Auswahl der Ausweisnummer 10' aus dem Ausweisnummernsatz 98 vorgesehen. Die Anweisungsdatensätze 16', 16", 16'" werden abhängig von der Lesernummer 20 und/oder von der Typeninformation 14 ermittelt. Es ist auch denkbar, dass der Benutzerdatenspeicher 12 genau eine Ausweisnummer 10' aufweist.

In einem weiteren Verfahrensschritt 74 sendet die Identifizierungsvorrichtung 34 die Anweisungsdatensätze 16' nacheinander über die Lesevorrichtung 22 an den Benutzerdatenspeicher 12. Der Benutzerdatenspeicher 12 empfängt die Anweisungsdatensätze 16' von der Identifizierungsvorrichtung 34. Der Benutzerdatenspeicher 12 wählt die Ausweisnummer 10' aus dem Ausweisnummernsatz 98 aus. Es ist auch denkbar, dass der Benutzerdatenspeicher 12 genau eine Ausweisnummer 10' enthält und der Schritt zur Auswahl der Ausweisnummer 10' entfällt.

Der Benutzerdatenspeicher 12 antwortet auf einen der empfangenen Anweisungsdatensätze 16', 16", 16'" zumindest mit Ausweisdaten 72, die wenigstens die Ausweisnummer 10' aufweisen. Die Anweisungsdatensätze 16', 16', 16'" können von zuvor empfangenen Ausweisdaten 72 abhängig sein.

Wie viele Anweisungsdatensätze 16', 16', 16'" gesendet werden und der Inhalt der Anweisungsdatensätze 16', 16", 16'" kann dabei durch die gewählte Anweisungstabelle 62 und durch Anzahl und Inhalt der in der Leser-Anweisungstabelle 64 eingetragenen, der Ausweisnummer 10' zugeordneten Anweisungsinformationen 68 variieren.

Die Identifizierungsroutine 50 bestimmt in einem weiteren Verfahrensschritt 76 einen Berechtigungsstatus 26 der gelesenen Ausweisnummer 10', und zwar hier aus der Ausweisnummer 10' des gelesenen Benutzerdatenspeichers 12 und der Lesernummer 20. In einem ersten Teilschritt 78 überprüft die Identifizierungsroutine 50, zu welchem der von dem Identifizierungssystem 32 überwachten Bereiche 44 der Benutzerdatenspeicher 12 Zutritt beantragt. In einem weiteren Teilschritt 80 bestimmt die Identifizierungsroutine 50, ob der Benutzerdatenspeicher 12 zu dem Zutritt zu dem Bereich 44 berechtigt, und erzeugt einen dementsprechenden Berechtigungsstatus 26. Wenn der Berechtigungsstatus 26 angibt, dass der Benutzerdatenspeicher 12 nicht berechtigt, wird das Verfahren an dieser Stelle abgebrochen. Alternativ oder zusätzlich könnten die Ausweisnummer 10' und/oder vorteilhaft Zugangsdaten für eine Offline-Überprüfung einer Zugangsberechtigung von dem Benutzerdatenspeicher 12 gelöscht werden, beispielsweise wenn der Benutzerdatenspeicher 12 in der Datenbank 36 der Identifizierungsvorrichtung 34 als gestohlen markiert ist.

Wenn der Berechtigungsstatus 26 angibt, dass der Benutzerdatenspeichers 12 berechtigt ist, bestimmt die Identifizierungsroutine 50 in einem weiteren Verfahrensschritt 82 eine Anweisungsabfolge 30 zum Schreiben von Daten auf den Benutzerdatenspeicher 12.

Alternativ könnte auf ein Schreiben von Daten nach der Bestimmung des Berechtigungsstatus 26 verzichtet werden. Die Daten sind als Daten der Primärfunktion oder als andere, dem Fachmann als sinnvoll erscheinende Daten ausgebildet, hier als Zugangsdaten für eine Offline-Überprüfung einer Zugangsberechtigung durch ein Türschloss. Alternativ könnten die Daten als ein neuer Kontostand einer Bezahlfunktion ausgebildet sein, der somit offline abgerufen werden kann.

Die Datenbank 36 weist in einem weiteren Verfahrensschritt 86 eine Ausweis-Anweisungstabelle 84 auf, in der zu einer Kombination aus der Ausweisnummer 10' und der Lesernummer 20 eine oder mehrere Anweisungsnummern 88 hinterlegt sind. Die Anweisungsnummern 88 verweisen jeweils auf Anweisungsinformationen 68 der Anweisungstabelle 62, die einen Aufbau der Anweisungsdatensätze 16', 16", 16'" zur Anforderung der Ausweisnummer 10' beschreiben. Die Anweisungstabelle 62 wird, wie bereits beschrieben, von der Typeninformation 14 abhängig gewählt.

Des Weiteren können die Anweisungsnummern 88 auf die Dateien 90 in dem Dateisystem 54 verweisen. Daten der Dateien 90 werden in einem nächsten Verfahrensschritt 92 als Schreibdaten 28 in die Anweisungsdatensätze 16', 16", 16'''aufgenommen. Des Weiteren beschreiben die Anweisungsinformationen 68, wie die Schreibdaten 28 der Anweisungsdatensätze 16', 16", 16'" vor dem Schreiben auf den Benutzerdatenspeicher 12 modifiziert werden, beispielsweise mit einem aktuellen Zeitstempel und/oder einem berechneten neuen Kontostand. Somit werden von der Ausweisnummer 10' abhängig Schreibdaten 28 bestimmt, die von der Ausweisnummer 10' abhängig mittels der Anweisungsabfolge 30 auf den Benutzerdatenspeicher 12 geschrieben werden. Das Identifizierungssystem 32 umfasst eine Schreibvorrichtung 100. Die Schreibvorrichtung 100 schreibt die Schreibdaten 28 auf den Benutzerdatenspeicher 12. Die Schreibvorrichtung 100 und die Lesevorrichtung 22 weisen in dem vorliegenden Ausführungsbeispiel eine gemeinsame nicht näher dargestellte Sende- und Empfangseinheit auf.

In einem weiteren Verfahrensschritt 94 sendet die Identifizierungsvorrichtung 34 den Anweisungsdatensatz 16' oder ggf. die Anweisungsdatensätze 16', 16", 16'" über die Lesevorrichtung 22 an den Benutzerdatenspeicher 12. Der Benutzerdatenspeicher 12 antwortet entsprechend dem für diese Kommunikation vorgesehenen Protokoll mit Ausweisdaten 72.

Nach einer erfolgreichen Kommunikation mit dem Benutzerdatenspeicher 12 und wenn der Berechtigungsstatus 26 angibt, dass der Benutzerdatenspeicher 12 zu einem Zutritt zu dem von dem Zutrittskontrollmittel 40 geschützten Bereich 44 berechtigt, steuert die Identifizierungsvorrichtung 34 in einem weiteren Verfahrensschritt 96 das Zutrittskontrollmittel 40 derart an, dass das Zutrittskontrollmittel 40 den Zutritt zu dem geschützten Bereich 44 freigibt.

Bei nicht erfolgreicher Kommunikation zwischen dem Benutzerdatenspeicher 12 und der Identifizierungsvorrichtung 34 zur Ermittlung der Ausweisnummer 10' antwortet der Benutzerdatenspeicher 12 mit einem Signal, das einen Initialisierungsstatus des Benutzerdatenspeichers 12 mitteilt. In einem Zustand, in dem der Benutzerdatenspeicher 12 nicht initialisiert ist, ermittelt die Identifizierungsvorrichtung 34 anhand der Typeninformation 14 mittels der Datenstrukturzuordnungstabelle 58 eine Datenstruktur. Die Schreibvorrichtung 100 ist dazu vorgesehen, den Benutzerdatenspeicher 12 zu initialisieren. Die Schreibvorrichtung 100 formatiert den Benutzerdatenspeicher 12. Die Schreibvorrichtung schreibt die ermittelte Datenstruktur auf den Benutzerdatenspeicher 12. Alternativ umfasst die Anweisungsabfolge 24 zur Anforderung der Ausweisnummer 10 einen Anweisungsdatensatz 16 zur Ermittlung eines Initialisierungsstatus des Benutzerdatenspeichers 12. Abhängig von dem Initialisierungsstatus des Benutzerdatenspeichers 12 wird der Benutzerdatenspeicher 12 initialisiert. Alternativ ermittelt die Identifizierungsvorrichtung 34 einen Initialisierungsstatus des Benutzerdatenspeichers 12 anhand der Datenstrukturzuordnungstabelle 58. Abhängig von dem Initialisierungsstatus des Benutzerdatenspeichers 12 wird der Benutzerdatenspeicher 12 initialisiert.

## Patentansprüche

1. Verfahren zumindest zum Lesen wenigstens einer Ausweisnummer (10', 10", 10"') von Benutzerdatenspeichern (12) mit unterschiedlichen Datenstrukturen, insbesondere von RFID-Karten mit unterschiedlichen Datenstrukturen,
wobei eine Typeninformation (14) eines gelesenen Benutzerdatenspeichers (12) bestimmt wird,
wobei zumindest ein Anweisungsdatensatz (16', 16", 16'") zur Anforderung der Ausweisnummer (10, 10', 10'") bestimmt wird, der zumindest anhand der Typeninformation (14) an die Datenstruktur des Benutzerdatenspeichers (12) angepasst ist,
wobei der Anweisungsdatensatz (16', 16", 16'") an den Benutzerdatenspeicher (12) gesendet wird,
wobei der Benutzerdatenspeicher (12) den Anweisungsdatensatz (16', 16", 16'") empfängt und daraufhin zumindest die Ausweisnummer (10', 10", 10'") sendet.

2. Verfahren nach Anspruch 1, **dadurch gekennzeichnet, dass** von einer Lesernummer (20) einer den Benutzerdatenspeicher (12) lesenden Lesevorrichtung (22) und der Typeninformation (14) abhängig eine Anweisungsabfolge (24) ermittelt wird.

3. Verfahren nach den Ansprüchen 1 und 2, **dadurch gekennzeichnet, dass** die Anweisungsabfolge (24) zumindest den Anweisungsdatensatz (16', 16", 16'") zur Anforderung der Ausweisnummer (10', 10", 10'") umfasst.

4. Verfahren zumindest nach Anspruch 2, **dadurch gekennzeichnet, dass** die Lesevorrichtung (22) die Anweisungsabfolge (24) drahtlos an den Benutzerdatenspeicher (12) überträgt.

5. Verfahren zumindest nach Anspruch 2, **dadurch gekennzeichnet, dass** die Anweisungsabfolge (24) zumindest einen Anweisungsdatensatz (16', 16", 16"') zur Auswahl der Ausweisnummer (10', 10", 10'") aus einem Ausweisnummernsatz (98) umfasst.

6. Verfahren nach Anspruch 5, **dadurch gekennzeichnet, dass** eine Primärfunktion bestimmt wird, der die Ausweisnummer (10', 10", 10'") zugeordnet ist.

7. Verfahren nach einem der vorhergehenden Ansprüche, **dadurch gekennzeichnet, dass** ein Berechtigungsstatus (26) der Ausweisnummer (10') bestimmt wird.

8. Verfahren nach einem der vorhergehenden Ansprüche, **dadurch gekennzeichnet, dass** zumindest von der Ausweisnummer (10', 10", 10'") abhängig Schreibdaten (28) bestimmt werden, die auf den Benutzerdatenspeicher (12) geschrieben werden.

9. Verfahren zumindest nach Anspruch 7, **dadurch gekennzeichnet, dass** zumindest von dem Berechtigungsstatus (26) abhängig eine Zugangssteuerung erfolgt.

10. Verfahren nach einem der vorhergehenden Ansprüche, **dadurch gekennzeichnet, dass** ein Initialisierungsstatus des Benutzerdatenspeichers (12) bestimmt wird, in dessen Abhängigkeit der Benutzerdatenspeicher (12) initialisiert wird.

11. Identifizierungssystem (32) zumindest zum Lesen wenigstens einer Ausweisnummer (10', 10", 10'") von Benutzerdatenspeichern (12) mit unterschiedlichen Datenstruktur, insbesondere von RFID-Karten mit unterschiedlichen Datenstruktur, mit zumindest einem Benutzerdatenspeicher (12) und mit einer Identifizierungsvorrichtung (34), die dazu vorgesehen ist, eine Typeninformation (14) des gelesenen Benutzerdatenspeichers (12) zu bestimmen, **dadurch gekennzeichnet, dass** die Identifizierungsvorrichtung (34) dazu vorgesehen ist, zumindest einen Anweisungsdatensatz (16', 16", 16'") zur Anforderung der Ausweisnummer (10', 10", 10'") zu bestimmen, die zumindest anhand der Typeninformation (14) des gelesenen Benutzerdatenspeichers (12) an die Datenstruktur des Benutzerdatenspeichers (12) angepasst ist.

12. Identifizierungssystem nach Anspruch 11, **dadurch gekennzeichnet, dass** die Identifizierungsvorrichtung (34) eine Datenbank (36) aufweist, die wenigstens dazu vorgesehen ist, der Typeninformation (14) des Benutzerdatenspeichers (12) zumindest eine Anweisungsinformation (68) zur Erzeugung des Anweisungsdatensatzes (16', 16", 16'") zuzuordnen.

13. Identifizierungssystem zumindest nach Anspruch 11, **gekennzeichnet durch** zumindest eine Lesevorrichtung (22), die in zumindest einem Betriebszustand eine Identifikationsinformation (18) des Benutzerdatenspeichers (12) liest.

14. Identifizierungssystem zumindest nach Anspruch 11, **gekennzeichnet durch** zumindest ein Zutrittskontrollmittel (40), das die Identifizierungsvorrichtung (34) von der Ausweisnummer (10) abhängig steuert.

15. Identifizierungssystem nach zumindest nach Anspruch 11, **gekennzeichnet durch** zumindest eine Schreibvorrichtung (100), die zumindest dazu vorgesehen ist, den Benutzerdatenspeicher (12) zu initialisieren.
